# FASCICULE DE BREVET EUROPEEN

(11) **EP 0 784 390 B1**
(45) Date de publication et mention de la délivrance du brevet: **03.12.2003**
(21) Numéro de dépôt: 97400012.7
(22) Date de dépôt: 06.01.1997
(51) Int. Cl.: H04B 17/00, H04B 7/15

(54) **Procédé de changement du programme de supervision installé dans une station réceptrice d'un faisceau hertzien, station réceptrice et système de transmission de données par voie hertzienne correspondants**
Verfahren zür Überwachungsprogrammänderung in einer Empfangsanlage einer Richtfunkstrecke, Empfangsanlage und entsprechendes Richtfunk-Datenübertragungssystem
Method for changing the monitoring program in a receiving station of a microwave link, receiving station and corresponding microwave data transmission system

(30) Priorité: 12.01.1996 FR 9600326
(43) Date de publication de la demande: 16.07.1997
(73) Titulaire: ALCATEL, 75008 Paris (FR)
(72) Inventeur: Spatz, Véronique, 92800 Puteaux (FR); Fropier, Michel, 77186 Noisiel (FR); Chastel, Nicolas, 92800 Puteaux (FR); Brunet, Pascal, 92300 Levallois-Perret (FR)
(74) Mandataire: Smith, Bradford Lee

(56) Documents cités:
- COMMUTATION & TRANSMISSION, 1991, FRANCE, vol. 13, no. 3, ISSN 0242-1283, pages 61-76, XP000262699 DE LUCA O ET AL: "New generation 140 and 155 MBit/s digital microwave system"
- COMMUTATION & TRANSMISSION, 1989, FRANCE, vol. 11, no. 4, ISSN 0242-1283, pages 33-46, XP000096021 PERUYERO M ET AL: "SYSTEME DE SURVEILLANCE ET EXPLOITATION DES ART RES HERTZIENNES DE DEUXI ME G N RATION"
- GLOBECOM '85. IEEE GLOBAL TELECOMMUNICATIONS CONFERENCE. CONFERENCE RECORD. COMMUNICATION TECHNOLOGY TO PROVIDE NEW SERVICES (CAT. NO.85CH2190-7), NEW ORLEANS, LA, USA, 2-5 DEC. 1985, 1985, NEW YORK, NY, USA, IEEE, USA, pages 1078-1082 vol.3, XP002014309 MILNE D M: "Switch terminating equipment for MDR-2000 series digital radio"

## Description

Le domaine de l'invention est celui de la transmission de données par voie hertzienne. Plus précisément, l'invention concerne un procédé de changement du programme de supervision installé dans une station réceptrice d'un faisceau hertzien, dans un réseau d'exploitation.

D'une façon générale, dans un réseau d'exploitation par voie hertzienne, une station principale (ou station maître) émet un faisceau hertzien à destination d'une ou plusieurs stations terminales.

Ce faisceau hertzien supporte notamment une voie principale, permettant de transmettre des données utiles (ou données client), et une ou plusieurs voies de service, permettant de transmettre des données d'exploitation du réseau (telles que notamment des données liées à la configuration du réseau, aux différents protocoles mis en oeuvre, à des alarmes, etc.).

Si la distance séparant la station principale de la station terminale est trop importante, une ou plusieurs stations intermédiaires sont alors utilisées. Ces dernières assurent chacune un rôle de répéteur, en recevant et réémettant le faisceau hertzien.

Par station réceptrice, on entend dans la présente description, de façon très générale, toute station du type recevant un faisceau hertzien et fonctionnant selon un programme de supervision qu'elle stocke. Par conséquent, on appelle ici station réceptrice aussi bien une station terminale qu'une station intermédiaire.

Pour diverses raisons, il peut être nécessaire de remplacer le programme courant de supervision qui se trouve dans une station réceptrice par un nouveau programme de supervision. En effet, lorsque l'on désire modifier le fonctionnement de la supervision du réseau, pour chacune des stations réceptrices du réseau, un nouveau programme de supervision doit être développé puis installé à la place de l'ancien programme de supervision. De plus, du fait de l'évolution rapide des réseaux, il devient de plus en plus fréquent de développer plusieurs versions successives d'un même programme de supervision. Pour chaque nouvelle version de programme, il convient d'effectuer à nouveau une installation sur l'ensemble des stations réceptrices du réseau.

On connaît dans l'état de la technique deux principales techniques permettant un tel changement de programme de supervision.

Selon la première technique connue, une personne se déplace sur le site de la station réceptrice, avec un moyen de stockage du nouveau programme de supervision (par exemple une disquette), et effectue sur place le chargement du nouveau programme de supervision dans la station réceptrice.

Cette première solution connue présente l'inconvénient de nécessiter un déplacement de personnel sur le site de la station réceptrice. En effet, un tel déplacement de personnel, qui doit être effectué pour chacune des stations réceptrices du réseau, représente au total un coût économique (en personnel ainsi qu'en frais de déplacement) important. De plus, vu l'évolution toujours croissante des réseaux actuels, ce coût économique total tend encore à augmenter, du fait que le nombre de stations réceptrices ainsi que leur éloignement deviennent de plus en plus importants.

La seconde technique connue consiste à relier par un réseau filaire la station réceptrice à un élément de réseau stockant le nouveau programme de supervision. Le nouveau programme de supervision est alors téléchargé par voie filaire sur la station réceptrice.

Cette seconde solution connue présente l'inconvénient de nécessiter une liaison dédiée entre la station réceptrice et l'élément de réseau stockant le nouveau programme de supervision. En effet, cette liaison dédiée présente un très faible taux d'occupation, ce qui la rend coûteuse et non rentable.

L'invention a notamment pour objectif de pallier ces inconvénients de l'état de la technique.

Plus précisément, un des objectifs de la présente invention est de fournir un procédé de changement du programme de supervision installé dans une station réceptrice d'un faisceau hertzien dans un réseau d'exploitation, le coût économique de mise en oeuvre de ce procédé étant moins élevé que celui des procédés connus de l'état de la technique.

L'invention a également pour objectif de fournir un tel procédé ne nécessitant ni déplacement de personnel sur le site de la station réceptrice, ni liaison filaire avec cette dernière.

Un autre objectif de l'invention est de fournir un tel procédé qui permette, à moindre coût, de changer aussi fréquemment que voulu le programme de supervision de chacune des stations réceptrices du réseau d'exploitation.

Un objectif complémentaire de l'invention est de fournir une station réceptrice permettant la mise en oeuvre d'un tel procédé.

Ces objectifs, ainsi que d'autres qui apparaîtront par la suite, sont atteints selon l'invention à l'aide d'un procédé de changement du programme de supervision installé dans une station réceptrice d'un faisceau hertzien dans un réseau d'exploitation, le procédé consistant à remplacer des instructions d'un programme courant de supervision de la station réceptrice par des instructions d'un nouveau programme de supervision sur la base duquel la station réceptrice doit fonctionner, le faisceau hertzien supportant, outre une voie principale, au moins une voie de service, ce procédé consistant à transmettre les instructions du nouveau programme de supervision à la station réceptrice par l'intermédiaire de la voie de service.

Ainsi, le principe général de l'invention consiste à télécharger le nouveau programme de supervision en utilisant de façon originale une voie de service hertzienne. Les instructions du nouveau programme de supervision sont acheminées jusqu'à la station réceptrice par le faisceau hertzien que reçoit de façon habituelle cette station réceptrice.

Aucun support de transmission supplémentaire (du type liaison filaire ou autre) n'est nécessaire. Le procédé de l'invention ne nécessite par ailleurs aucun déplacement de personnel. De ce fait, le coût de sa mise en oeuvre est beaucoup plus faible que celui des procédés connus (notamment ceux nécessitant un déplacement de personnel ou une liaison filaire).

Avantageusement, la station réceptrice destinatrice du nouveau programme de supervision est identifiée par une adresse propre dans le réseau d'exploitation et les instructions du nouveau programme de supervision transmises par l'intermédiaire de la voie de service sont accompagnées de l'adresse propre de la station réceptrice dans le réseau d'exploitation, de façon que la station réceptrice détecte sur la voie de service les instructions du nouveau programme de supervision qui lui sont destinées.

Ainsi, chaque station réceptrice peut recevoir un nouveau programme de supervision spécifique et adapté à ses besoins. Dans le cas (détaillé ci-dessous) où le réseau comporte une pluralité de stations intermédiaires, ceci permet également à chaque station intermédiaire de savoir si ces instructions reçues sur la voie de service lui sont destinées ou bien si elles doivent être réémises à destination d'une autre station intermédiaire ou de la station terminale.

Préférentiellement, le faisceau hertzien est du type constitué d'une succession de trames de données comportant chacune une pluralité d'intervalles de temps, la voie de service étant constituée par la récurrence d'au moins un intervalle de temps particulier dans au moins certaines de ces trames.

Dans un mode de réalisation préférentiel de l'invention, le procédé consiste également à transmettre un ordre de basculement entre le programme de supervision courant et le nouveau programme de supervision, après que les instructions du nouveau programme de supervision aient été transmises à la station réceptrice.

Ainsi, en fin de téléchargement, après réception de l'ordre de basculement, la station réceptrice redémarre avec le nouveau programme de supervision téléchargé.

L'invention concerne également une station réceptrice d'un faisceau hertzien dans un réseau d'exploitation, la station réceptrice fonctionnant selon un programme courant de supervision, le faisceau hertzien supportant, outre une voie principale, au moins une voie de service, cette station réceptrice comprenant des moyens de changement du programme courant de supervision, ces moyens de changement comprenant :
- des moyens de réception, par l'intermédiaire de la voie de service supportée par le faisceau hertzien, d'instructions d'un nouveau programme de supervision ;
- des moyens de stockage des instructions du nouveau programme de supervision.

Préférentiellement, les moyens de changement comprennent également :
- des moyens de réception, par l'intermédiaire de la voie de service supportée par le faisceau hertzien, d'un ordre de basculement entre le programme de supervision courant et le nouveau programme de supervision ;
- des moyens de basculement entre le programme de supervision courant et le nouveau programme de supervision, après que l'ordre de basculement ait été reçu, de façon que la station réceptrice fonctionne sur la base du nouveau programme de supervision.

L'invention concerne aussi un système de transmission de données par voie hertzienne, du type comprenant une station principale et au moins une station terminale, la station terminale recevant un faisceau hertzien émis par la station principale, la station terminale étant une station réceptrice telle que présentée ci-dessus.

Avantageusement, le système de transmission est du type comprenant également au moins une station intermédiaire, chaque station intermédiaire recevant le faisceau hertzien, soit de la station principale soit d'une autre station intermédaire, et le réémettant à destination soit de la station terminale soit à destination d'une autre station intermédiaire, chaque station intermédiaire étant également une station réceptrice telle que présentée ci-dessus.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- chacune des figures 1, 2 et 3 présente un schéma simplifié d'un mode de réalisation distinct d'un système de transmission de données par voie hertzienne comprenant une ou plusieurs stations réceptrices selon l'invention ;
- la figure 4 présente le principe général d'un mode de fonctionnement préférentiel du procédé de l'invention ;
- la figure 5 présente un exemple de structure de trame permettant d'expliquer un mode de réalisation préférentiel de la voie de service utilisée dans la mise en oeuvre du procédé de l'invention ;
- la figure 6 présente un schéma simplifié d'un mode de réalisation préférentiel d'une station réceptrice selon l'invention.

L'invention concerne donc un procédé de changement du programme de supervision installé dans une station réceptrice d'un faisceau hertzien, dans un réseau d'exploitation. L'invention concerne également une station réceptrice en tant que telle, en ce qu'elle permet la mise en oeuvre d'un tel procédé.

Le changement de programme que l'on cherche à effectuer dans le cadre de la présente invention est celui qui consiste à remplacer les instructions d'un programme courant de supervision d'une station réceptrice par les instructions d'un nouveau programme de supervision sur la base duquel cette station réceptrice doit fonctionner.

Le faisceau hertzien considéré ici est du type supportant, outre une voie principale, au moins une voie de service. La voie principale permet de transmettre des données utiles. La voie de service est prévue pour transmettre des données d'exploitation du réseau (données de configuration du réseau, données de protocoles, alarmes, etc.).

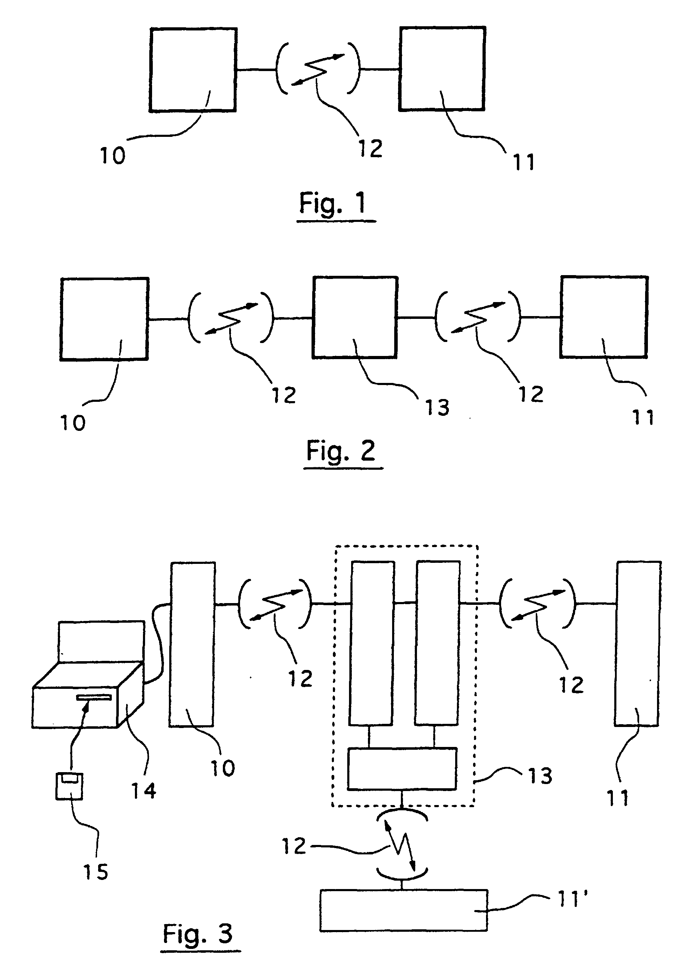

Chacune des figures 1, 2 et 3 présente un schéma simplifié d'un mode de réalisation distinct d'un système de transmission de données par voie hertzienne comprenant une ou plusieurs stations réceptrices selon l'invention.

Dans le premier mode de réalisation présenté sur la figure 1, le système de transmission de données par voie hertzienne comprend une station principale 10 et une station terminale 11. La station terminale 11 reçoit un faisceau hertzien 12 émis par la station principale 10. Dans ce premier cas, c'est la station terminale 11 qui est une station réceptrice selon l'invention.

Dans le second mode de réalisation présenté sur la figure 2, le système de transmission de données par voie hertzienne comprend également une station intermédiaire 13. Cette station intermédiaire 13 reçoit le faisceau hertzien 12 de la station principale 10, et le réémet à destination de la station terminale 11. Dans ce second cas, la station intermédiaire 13, comme la station terminale 11, est une station réceptrice selon l'invention.

On peut également prévoir plusieurs stations intermédiaires 13 en cascade, entre la station principale 10 et la station terminale 11. Dans ce cas, chaque station intermédiaire 13 est également une station réceptrice selon l'invention.

Dans le troisième mode de réalisation présenté sur la figure 3, le système de transmission de données par voie hertzienne comprend une station principale 10, une station intermédiaire 13 et deux stations terminales 11, 11'. Dans ce troisième cas, la station intermédiaire 13, comme chacune des deux stations terminales 11. 11', est une station réceptrice selon l'invention.

Un micro-ordinateur 14 est relié à la station principale 10. Il peut lire une disquette 15 permettant le stockage des nouveaux programmes de supervision à tétécharger sur chacune des stations réceptrices (à savoir la station intermédiaire 13 et les deux stations terminales 11, 11').

En résumé, dans chacun de ces trois modes de réalisation d'un système de transmission de données par voie hertzienne, on appelle station réceptrice aussi bien une station terminale 11, 11' qu'une station intermédiaire 13.

Dans la suite de la description, on entend par station réceptrice, de façon très générale, toute station du type recevant un faisceau hertzien et fonctionnant selon un programme de supervision qu'elle stocke.

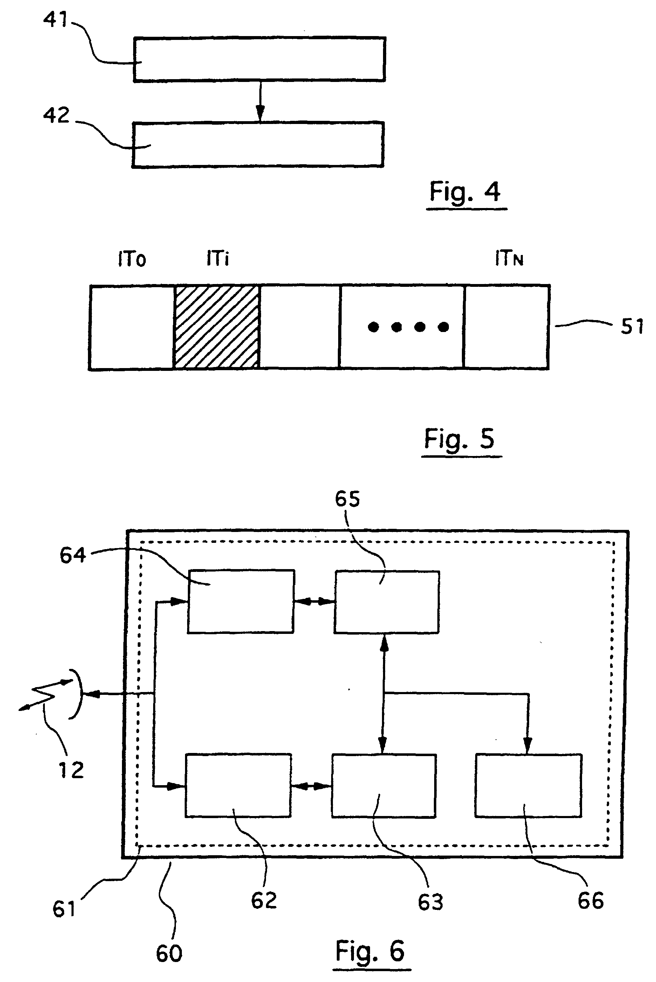

La figure 4 présente le principe général d'un mode de fonctionnement préférentiel du procédé de l'invention. Une première phase 41 de ce procédé consiste à transmettre les instructions du nouveau programme de supervision à la station réceptrice par l'intermédiaire de la voie de service supportée par le faisceau hertzien.

Optionnellement, une seconde phase 42 du procédé de l'invention consiste à transmettre un ordre de basculement entre le programme de supervision courant et le nouveau programme de supervision. Cet ordre de basculement est par exemple transmis au programme de supervision.

On peut également prévoir d'identifier chaque station réceptrice par une adresse propre dans le réseau d'exploitation. Dans ce cas, la station principale précise, pour chaque envoi d'instructions d'un nouveau programme, l'adresse de la station réceptrice destinatrice de cet envoi. Ainsi, parmi les différentes stations réceptrices qui reçoivent cet envoi, seule la station réceptrice concernée (destinatrice) effectue le procédé de changement de programme de supervision.

La figure 5 présente un exemple de structure de trame permettant d'expliquer un mode de réalisation préférentiel de la voie de service utilisée dans la mise en oeuvre du procédé de l'invention.

On considère dans cet exemple que le faisceau hertzien est du type constitué d'une succession de trames de données. Comme présenté sur la figure 5, chaque trame 51 comporte une pluralité d'intervalles de temps IT₀ à IT_{N}.

La récurrence d'un intervalle de temps particulier ITᵢ dans chaque trame 51 constitue un canal physique. Plusieurs canaux logiques peuvent être multiplexés sur ce canal physique. Pour cela, les intervalles de temps successifs de ce canal physique (c'est-à-dire les ITᵢ des trames successives) sont répartis entre les différents canaux logiques multiplexés.

La voie de service correspond par exemple à un canal physique du faisceau hertzien sur lequel sont multiplexés plusieurs canaux. Un de ces canaux multiplexés est utilisé pour transmettre les instructions du nouveau programme de supervision. Les autres canaux sont utilisés, de façon classique, pour transmettre les données d'exploitation du réseau.

La figure 6 présente un schéma simplifié d'un mode de réalisation préférentiel d'une station réceptrice selon l'invention. La station réceptrice 60 comprend des moyens 61 de changement du programme courant de supervision, comprenant :
- des moyens 62 de réception, par l'intermédiaire de la voie de service supportée par le faisceau hertzien 12, des instructions du nouveau programme de supervision ;
- des moyens 63 de stockage de ces instructions du nouveau programme de supervision.

Les moyens 63 de stockage du nouveau programme de supervision sont par exemple constitués d'une mémoire tampon, distincte de la mémoire courante 66 permettant le stockage du programme de supervision courant. Ces mémoires 63, 66 sont des mémoires réinscriptibles (mémoires flash par exemple).

Le basculement entre le programme de supervision courant et le nouveau programme de supervision consiste dans ce cas à recopier le contenu de la mémoire tampon 63 dans la mémoire courante 66, puis à relancer (par un redémarrage ou reset) le programme contenu dans cette mémoire courante 66 (qui est maintenant le nouveau programme de supervision).

Optionnellement, les moyens 61 de changement de programme de supervision comprennent également :
- des moyens 64 de réception, par l'intermédiaire de la voie de service supportée par le faisceau hertzien 12, d'un ordre de basculement entre le programme de supervision courant et le nouveau programme de supervision ;
- des moyens 65 de basculement entre le programme de supervision courant et le nouveau programme de supervision.

Dans ce cas, les moyens 64 de réception activent les moyens 65 de basculement après avoir reçu l'ordre de basculement. Les moyens 65 de basculement comprennent par exemple des moyens (non représentés) de recopie du contenu de la mémoire tampon 63 dans la mémoire courante 66, et de relance du programme contenu dans cette mémoire courante 66.

## Revendications

1. Procédé de changement du programme de supervision installé dans une station réceptrice (60 ; 11, 11', 13) d'un faisceau hertzien (12) dans un réseau d'exploitation, ledit procédé consistant à remplacer des instructions d'un programme courant de supervision de ladite station réceptrice (60 ; 11, 11', 13) qu'elle stocke dans des premiers moyens de stockage (66) par des instructions d'un nouveau programme de supervision sur la base duquel ladite station réceptrice (60 ; 11, 11', 13) doit fonctionner, ledit faisceau hertzien (12) supportant, outre une voie principale, au moins une voie de service,
le procédé consistant à transmettre (41) les instructions du nouveau programme de supervision à ladite station réceptrice (60 ; 11, 11', 13) par l'intermédiaire de ladite voie de service,
**caractérisé en ce qu'**il consiste :
- à transmettre (42) un ordre de basculement entre le programme de supervision courant et le nouveau programme de supervision, après que les instructions du nouveau programme de supervision aient été transmises à ladite station réceptrice (60 ; 11, 11', 13), lesdites instructions du nouveau programme de supervision étant stockées dans des seconds moyens (63) de stockage de ladite station,
- à basculer entre le programme de supervision courant vers le nouveau programme de supervision, après que ledit ordre de basculement ait été reçu, de façon que ladite station réceptrice (60 ; 11, 11', 13) fonctionne sur la base dudit nouveau programme de supervision.

2. Procédé selon la revendication 1, **caractérisé en ce que** ladite station réceptrice (60 11, 11', 13) destinatrice dudit nouveau programme de supervision est identifiée par une adresse propre dans ledit réseau d'exploitation,
**et en ce que** lesdites instructions du nouveau programme de supervision transmises par l'intermédiaire de la voie de service sont accompagnées de ladite adresse propre de la station réceptrice (60 ; 11, 11', 13) dans le réseau d'exploitation, de façon que ladite station réceptrice (60 ; 11, 11' 13) détecte sur ladite voie de service les instructions du nouveau programme de supervision qui lui sont destinées.

3. Procédé selon l'une quelconque des revendications 1 et 2, ledit faisceau hertzien étant du type constitué d'une succession de trames de données (51) comportant chacune une pluralité d'intervalles de temps (IT),
**caractérisé en ce que** ladite voie de service est constituée par la récurrence d'au moins un intervalle de temps particulier (ITᵢ) dans au moins certaines desdites trames.

4. Station réceptrice (60 ; 11, 11', 13) d'un faisceau hertzien dans un réseau d'exploitation, ladite station réceptrice (60 ; 11, 11', 13) fonctionnant selon un programme courant de supervision qu'elle stocke dans des premiers moyens de stockage (66), ledit faisceau hertzien (12) supportant, outre une voie principale, au moins une voie de service,
la station réceptrice comprenant des moyens (61) de changement dudit programme courant de supervision, lesdits moyens de changement comprenant :
- des moyens (62) de réception, par l'intermédiaire de ladite voie de service supportée par le faisceau hertzien, d'instructions d'un nouveau programme de supervision,
**caractérisée en ce que** lesdits moyens (61) de changement comprennent également :
- des moyens (63) de stockage desdites instructions du nouveau programme de supervision,
- des moyens (64) de réception, par l'intermédiaire de ladite voie de service supportée par le faisceau hertzien, d'un ordre de basculement entre le programme de supervision courant et le nouveau programme de supervision ;
- des moyens (65) de basculement entre le programme de supervision courant et le nouveau programme de supervision, après que ledit ordre de basculement a été reçu, de façon que ladite station réceptrice (60 ; 11, 11', 13) fonctionne sur la base dudit nouveau programme de supervision.

## Patentansprüche

1. Verfahren zum Ändern des Überwachungsprogramms, das in einer Empfangsstation (60; 11, 11', 13) einer Richtfunkstrecke (12) in einem Betriebsnetz installiert ist, wobei das Verfahren darin besteht, die Befehle eines momentanen Überwachungsprogramms der Empfangsstation (60; 11, 11', 13), die diese in ersten Speichermitteln (66) speichert, durch Befehle eines neuen Überwachungsprogramms, auf dessen Grundlage die Empfangsstation (60; 11, 11', 13) arbeiten soll. zu ersetzen, wobei die Richtfunkstrecke (12) außer einem Hauptweg wenigstens einen Diensteweg unterstützt,
wobei das Verfahren darin besteht, die Befehle des neuen Überwachungsprogramms über den Diensteweg zu der Empfangsstation (60; 11, 11', 13) zu senden,
**dadurch gekennzeichnet, dass** es darin besteht:
- eine Umschaltreihenfolge zwischen dem momentanen Überwachungsprogramm und dem neuen Überwachungsprogramm zu senden (42), nachdem die Befehle des neuen Überwachungsprogramms zu der Empfangsstation (60; 11, 11', 13) gesendet worden sind, wobei die Befehle des neuen Überwachungsprogramms in zweiten Speichermitteln (63) der Station gespeichert werden.
- von dem momentanen Überwachungsprogramm zu dem neuen Überwachungsprogramm umzuschalten, nachdem die Umschaltreihenfolge empfangen worden ist, derart, dass die Empfangsstation (60; 11, 11', 13) auf der Grundlage des neuen Überwachungsprogramms arbeitet.

2. Verfahren nach Anspruch 1, **dadurch gekennzeichnet, dass** die Empfangsstation (60; 11, 11', 13), an die das neue Überwachungsprogramm gesendet werden soll, durch eine eigene Adresse in dem Betriebsnetz identifiziert wird,
und dass die Befehle des neuen Überwachungsprogramms, die über den Diensteweg gesendet werden, von der eigenen Adresse der Empfangsstation (60: 11, 11', 13) in dem Betriebsnetz begleitet werden, derart, dass die Empfangsstation (60; 11, 11', 13) in dem Diensteweg die Befehle des neuen Überwachungsprogramms, die für sie bestimmt sind. erfasst.

3. Verfahren nach einem der Ansprüche 1 und 2, bei dem die Richtfunkstrecke von dem Typ ist. der durch eine Folge von Datenrahmen (51) gebildet ist, die jeweils mehrere Zeitintervalle (IT) enthalten,
**dadurch gekennzeichnet, dass** der Dienstweg durch die Wiederholung wenigstens eines bestimmten Zeitintervalls (IT1) wenigstens in bestimmten der Rahmen gebildet ist.

4. Empfangsstation (60; 11, 11', 13) einer Richtfunkstrecke in einem Betriebsnetz, wobei die Empfangsstation (60; 11, 11', 13) gemäß einem momentanen Überwachungsprogramm arbeitet, das sie in ersten Speichermitteln (66) speichert,
wobei die Richtfunkstrecke (12) außer einem Hauptweg wenigstens einen Diensteweg unterstützt,
wobei die Empfangsstation Mittel (61) zum Ändern des momentanen Überwachungsprogramms umfasst, wobei die Änderungsmittel umfassen:
- Mittel (62), die über den von der Richtfunkstrecke unterstützten Diensteweg Befehle eines neuen Überwachungsprogramms empfangen,
**dadurch gekennzeichnet, dass** die Änderungsmittel (61) außerdem umfassen:
- Mittel (63) zum Speichern der Befehle des neuen Überwachungsprogramms,
- Mittel (64), die über den durch die Richtfunkstrecke unterstützten Diensteweg eine Umschaltreihenfolge zwischen dem momentanen Überwachungsprogramm und dem neuen Überwachungsprogramm empfangen;
- Mittel (65), die zwischen dem momentanen Überwachungsprogramm und dem neuen Überwachungsprogramm umschalten, nachdem die Umschaltreihenfolge empfangen worden ist, derart, dass die Empfangsstation (60; 11, 11', 13) auf der Grundlage des neuen Überwachungsprogramms arbeitet.

## Claims

1. A method of changing the supervisor program installed in a receiver station (60; 11, 11', 13) for receiving a radio beam (12) in a supervisory network, said method consisting in replacing instructions in a current supervisor program of said receiver station (60; 11, 11', 13) that is stored in first storage means (66) with instructions of a new supervisor program on the basis of which said receiver station (60; 11, 11', 13) is to operate, said radio beam (12) carrying at least one service channel in addition to a main channel;
the method consisting in conveying (41) the instructions of the new supervisor program to said receiver station (60; 11, 11', 13) via said service channel,
the method being **characterized in that** it consists:
in conveying (42) a command to switch over from the current supervisor program to the new supervisor program after the instructions of the new supervisor program have been conveyed to said receiver station (60; 11, 11', 13), said instructions of the new supervisor program being stored in second storage means (63) of said station; and
in switching over from the current supervisor program to the new supervisor program after said switch-over command has been received, so that said receiver station (60; 11, 11', 13) operates on the basis of said new supervisor program.

2. A method according to claim 1, **characterized in that** said receiver station (60; 11, 11', 13) to which said new supervisor program is addressed is identified by a specific address in said supervisory network;
and **in that** said instructions of the new supervisor program, which instructions are conveyed via the service channel, are accompanied by said specific address of the receiver station (60; 11, 11', 13) in the supervisory network, so that said receiver station (60; 11, 11', 13) detects, on said service channel, its new supervisor program instructions.

3. A method according to claim 1 or 2, said radio beam being of the type constituted by a succession of data frames (51 ), each of which comprises a plurality of time slots (IT);
said method being **characterized in that** said service channel is constituted by at least one particular time slot (ITᵢ) recurring in at least some of said frames.

4. A receiver station (60; 11, 11', 13) for receiving a radio beam in a supervisory network, said receiver station (60; 11, 11', 13) operating under a current supervisor program that it stores in first storage means (66), said radio beam (12) carrying at least one service channel in addition to a main channel;
the receiver station including program-changing means (61) for changing said current supervisor program, said program-changing means including:
means (62) for receiving instructions of a new supervisor program via said service channel carried by the radio beam;
the receiver station being **characterized in that** said program-changing means (61) further include:
means (63) for storing said instructions of the new supervisor program;
means (64) for receiving a switch-over command to switch over from the current supervisor program to the new supervisor program, the command being received via said service channel carried by the radio beam; and
means (65) for switching over from the current supervisor program to the new supervisor program after said switch-over command has been received, so that said receiver station (60; 11, 11', 13) operates on the basis of said new supervisor program.
